# EUROPEAN PATENT SPECIFICATION

(11) **EP 1 918 703 B1**
(45) Date of publication and mention of the grant of the patent: **24.06.2015**
(21) Application number: 07002604.2
(22) Date of filing: 07.02.2007
(51) Int. Cl.: G01N 29/14, G01N 29/24, C21C 5/46, G01H 3/00, H04R 1/34

(54) **Acoustic emission control of slag height in a steelmaking process**
Schallemissionskontrolle der Schlackendicke in einem Stahlherstellungsprozess
Contrôle de l'épaisseur de la couche de scorie dans un processus métallurgique par des émissions acoustiques

(43) Date of publication of application: 07.05.2008
(73) Proprietor: Tata Steel UK Limited, London SW1P 4WY (GB)
(72) Inventor: Crudgington, Kenneth George, Hartburn, Stockton on Tees TS18 5AW (GB)
(74) Representative: Bodin, Andre

(56) References cited:
- EP-A- 1 306 451
- DE-A1- 4 330 752
- GB-A- 1 079 572
- US-A- 4 368 877
- US-A- 5 028 258

## Description

The invention relates to an acoustic probe for detecting process sounds in a steelmaking process, to be used in an audiometer system.

Most processes generate characteristic frequencies in their operation, which can range from a few Hz to hundreds of kHz. Quite often, the frequency spectrum of the noise contains useful information about the process and its operating condition. This effect has been used to determine the condition of and indicating and/or controlling the formation and behaviour of slag in the steelmaking process.

EP-A-1 306 451 discloses a method and an apparatus for determining the slag height during blowing in a Basic Oxygen Steelmaking process (BOS-process) wherein the characteristics of the foaming slag are determined from the sound emissions in the converter. These sound emissions are recorded using a microphone.

Particularly in the BOS-process, where a liquid iron melt is refined in a converter by blowing pure oxygen into the melt, a very reactive and foaming slag is formed. As a result, the slag height increases in the converter. In some cases the slag even 'boils over', a phenomenon known as 'slopping'. This should be avoided, not only for reasons of yield losses, but also for safety reasons. The slopping may cause ejection of slag, which may be hazardous to the work force.

The acoustic emissions of the steelmaking process are influenced by the slag height. The increasing thickness of the slag layer will absorb more and more of the sound generated by the oxygen blowing into the melt. The sound emissions can therefore be used to characterise not only the slag height, but the progress of the steel making process as a whole.

To reach as high a ratio of signal-to-noise ratio as possible, it is known to locate the acoustic probe as close to the source of the signal as possible. The signal-to-noise ratio, or S/N or SNR, is a measure of signal strength (i.c. the process sounds emanating from the steelmaking process) relative to background noise. The ratio is usually measured in decibels (dB). In the particular case of the BOS-process the probe, i.e. a microphone, needs to be placed as close to the converter opening as possible. The environment at this location is particularly unfriendly in terms of temperature pressure and dust. In general, a microphone has to be protected against the environment. Protection against dust and temperature by a gas flow causes a deterioration of the signal-to-noise ratio and hamper an accurate determination of the slag height or the risk for slag ejection.

From GB 1,079,572 a device is known where the microphone is mounted at the end of an acoustic horn in the hood on the converter. From US 5,028,258 the microphone is mounted at the end of a sound conducting tube which extends through the hood on the converter. Nitrogen is used to protect the microphone against the high temperatures. EP-A-0 637 634 discloses a method of controlling the envelopment of the arc by foaming slag in an Electric Arc Furnace by measuring sound emissions using a microphone in the off-gas conduit of the EAF.

The problem with the existing probes is that they are vulnerable to pollution and malfunctioning as a result of the high temperatures, pressure surges and dusty environment in which they have to perform the sound recordings.

It is an object of this invention to provide an improved acoustic probe with an improved and consistent frequency response under the conditions of a steelmaking process.

The object of this invention is reached by the device according to claim 1. In the system according to the invention, the tapered channel provides an acoustic lens for the process sounds, thereby enhancing the ratio of process sounds over environmental noise. This results in a much improved frequency response, enabling to monitor slag height and slag characteristics during steelmaking more reliably.

The tube according to the invention comprises an internally tapered channel having its widest opening nearest the first opening and having its narrowest opening nearest the second opening and wherein the tapering angle is constant and has a value of between 4° and 20°. Although a non-constant tapering angle, leading to a tube for instance having a shape such as the bell of a trumpet, may also provide good results, the inventor found that a constant angle provided good results in terms of S/N. Moreover, it is easier to machine a constant angle. Preferably the tapering angle is between 8° and 16°, more preferably between 10° and 14°. A tapering angle of about 11° provides excellent results in terms of S/N.

In an embodiment the internal pressure inside the acoustic probe is controlled using pressure vents. These pressure vents allow the pressure in the acoustic probe to vary and avoid influencing the acoustic properties by temperature and to prevent the build-up of air pressure in the acoustic probe. It is important that the pressure vents do not compromise the acoustic properties of the probe. In an embodiment the pressure vents are holes, preferably with a diameter of below 2 mm, for instance about 0.5 mm.

The first opening is closed with a dust protection membrane. This dust protection membrane is preferably in the form of a metal foil, preferably made of brass. A thin metal foil protects the acoustic probe against any dust, is resistant against higher temperatures, and allows sound waves to pass the membrane. A brass membrane allows the right sound frequency range to pass. Alternative dust membranes such as polymer foils which are normally used in the state of the art acoustic probes succumb to the harsh conditions of a steelmaking process very quickly.

Although, in an embodiment not falling under the scope of the claims, it is possible to provide the acoustic tube as a metal acoustic tube, or even as an integral part of the housing, it should be noted that this results in a lower ratio process sounds over environment noise or S/N. The process sounds are more difficult to separate from the environment noise when the aforementioned ratio is low.

By using an acoustic tube which is designed so as to dampen the environment noise conducted by the housing of the acoustic probe whilst functioning as an acoustic lens for the process sounds this ratio can be significantly or greatly enlarged. It was found that polymers provide good damping properties. Particularly polymers of the nylon-type provide a good combination of damping properties, resistance to elevated temperature and machinability of the material.

Environment noise transfer to the acoustic probe through the housing can also be limited by using a flexible mount to mount the probe in the steelmaking environment. Also environment noise transfer to the microphone can be limited by decoupling the microphone from the housing, for instance through the use of elastomeric O-rings.

The housing is preferably produced from stainless steel. In an embodiment the housing is CNC-machined as one piece. This method of production enables high accuracy and high reproducibility production which makes the process economical and provides a good quality product in terms of consistent geometry. The acoustic probe according to the invention may be provided with quick mounting-quick release means for mounting it in the measurement environment. The acoustic probe will also be provided with means to convey the signal picked up by the microphone to a signal processing unit, e.g. an audiometer system, for instance by means of a plug-socket connection through the end cap of the probe.

One or more acoustic probes according to the invention can be used in a closed loop control system for controlling the slag height in a steelmaking process using sound measurements.

In a steelmaking converter the refining progress depends mainly on slag reactions. For this reason the formation and maintenance of a foamy, reactive slag, without causing slopping of the converter, is of high significance. The control of the distance of the blowing lance from the surface of the molten bath, which distance has a significant influence on the slag control, and the control of the rate at which oxygen is supplied through the blowing lance are the main control mechanisms. At the beginning of the blowing operation a relatively high oxidation of iron is achieved which assists in the dissolution of the lime which has been added. At these early stages the silicon dissolved in the metal will oxidise and become part of the steelmaking slag. Once the silicon has been oxidised an increase in decarburization will occur. A good ratio of direct and indirect decarburisation must be maintained in order to ensure a desirable slag level and to avoid slopping.

For this reason the distance of the lance from the surface of the molten bath is decreased as the slag level rises after the beginning of the blowing operation. Because the slag which has formed will dampen the blowing noise depending on the slag height and consistency, the sound level which has been measured through the slag can be utilized as a control of the slag height and/or the composition of the slag.

For this reason the sound level of the blowing noise which is dampened by the slag and is measured can be used as a control of the distance of the lance from the surface of the molten bath in such a manner that a proper reactive fluid slag will be obtained in each stage of the blowing process and that slopping of the converter can be avoided. The state of the slag will be influenced by numerous variables and changes constantly. For this reason a control of the lance only in dependence on the sound level of the blowing noise which is damped by the slag is not sufficient for ensuring that the slag behaviour is under control and that slopping will be prevented, as is required.

In an embodiment a blowing lance extends into a top-blowing steelmaking converter and is fixed to a slider, which is vertically adjustable by an actuator. The blowing lance communicates via a supply line with an oxygen source and extends through a hood, which is associated with the top-blowing steel-making converter. The acoustic probe is mounted so as to pick up the process sounds of the steelmaking process. The output signal from the acoustic probe is fed into a signal processing unit, the audiometer system, which communicates with a closed loop process control unit. In this unit the process control logic will use the measured and processed sound to amend the blowing profile in order to maintain an optimum reactive slag while avoiding the occurrence of slopping. Changes to the blowing profile are made by either changing the flow rate of the oxygen through the blowing lance, or by adjusting the distance between the tip of the blowing lance and the molten bath.

The use of the acoustic probes according to the invention will provide a much clearer frequency spectrum than the acoustic probes according to the state of the art, resulting in a much better predictability of the slag behaviour and therefore of a much better control of the slag behaviour.

A computer system for controlling the lance height for a BOS-process comprises of an acoustic probe according to the invention, an audiometer system, which is the signal processing unit, and process control unit for processing the process sounds measured using the acoustic probe. The process control unit is preferably a closed loop process control unit. Process control is achieved by using a computer program with the said signal processing to optimise the distance between the oxygen blowing lance and the level of the molten steel by automatically controlling the lance position and/or changing the oxygen flow rate to influence slag foaming behaviour.

The invention will now be explained in more detail by means of the following, non limiting example and figures.

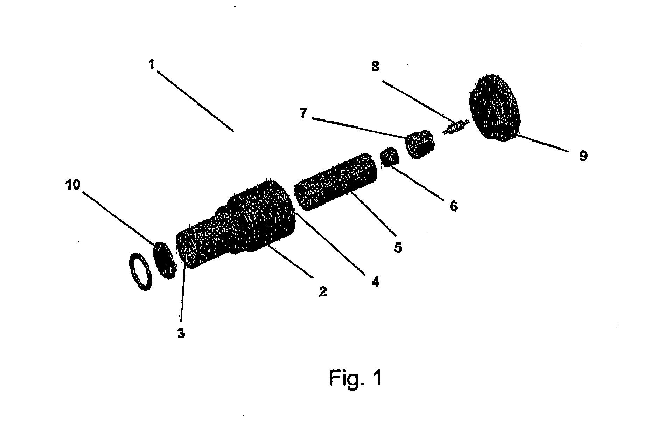

Figure 1 shows an exploded view of an acoustic probe 1 according to the invention. A housing 2 having a first opening 3 and a second opening 4 and a substantially elongated channel connecting the first opening with the second opening, is provided with a tube 5. This tube is internally shaped to a form so as to provide a linear frequency response. A microphone 6 is located in the tube and is kept in place by a microphone holder 7, a flexible mount and a number of O-rings (not shown). The holder, mount and rings ensure a vibration-free mounting of the microphone and thus as low a disturbance from environment noise as possible. The second opening 4 of the housing is closed by an end cap 9, which is provided with a pressure vent 11 (not shown) and means for allowing the signal picked up by the microphone to pass through the end cap, for instance a plug-socket connection (not shown). The first opening of the housing is closed by a dust membrane 10, for instance a thin brass foil. A retaining ring may be used to keep the brass foil in place.

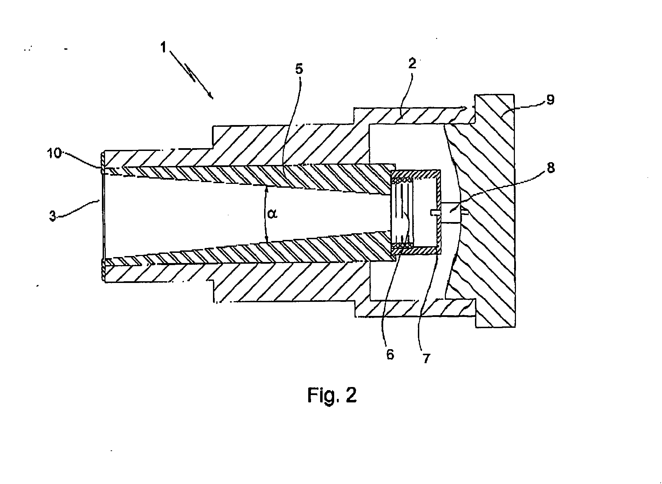

Figure 2 shows a cross section of an acoustic probe 1 according to the invention. The housing 2 is provided in the substantially elongated channel with a tube 5. This tube is internally tapered with a tapering angle □. At the narrow end of the tube the microphone 6 is located which is kept in place by a microphone holder, a flexible mount and a number of O-rings (not shown). The second opening 4 of the housing is closed by an end cap 8, which is provided with a pressure vent (not shown) and means for allowing the signal picked up by the microphone to pass through the end cap, for instance a socket (not shown). The first opening of the housing, i.e. the wide end of the tube 5, is closed by a dust membrane 7.

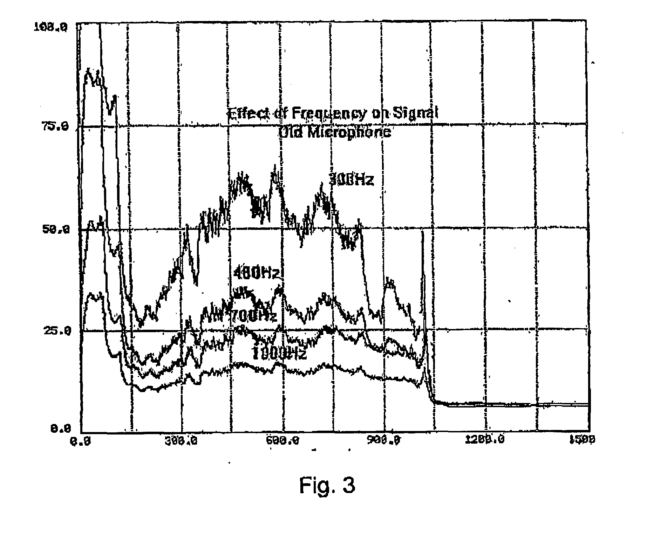

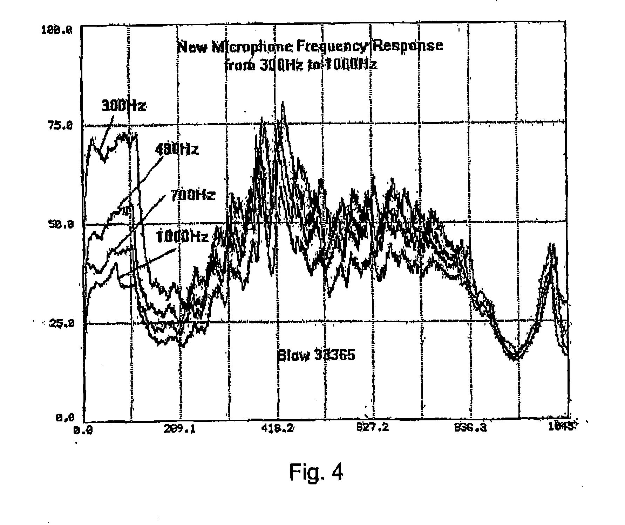

Figure 3 and 4 show the frequency response of the acoustic probe of the state of the art and of the acoustic probe according to the invention respectively. It is clearly visible from these figures, that the acoustic probe according to the invention in Figure 4 provides a frequency distribution which is much more linear than that of the old design in Figure 3.

## Claims

1. Acoustic probe (1) for recording process sounds in a steelmaking process comprising a housing (2) having a first opening (3) and a second opening (4) and an elongated channel connecting the first opening with the second opening, a separate tube (5) provided in the elongated channel, and a microphone (6), wherein the tube (5) comprises an internally tapered channel, wherein the tapering angle, α, is constant and has a value of between 4 and 20° to provide a linear frequency response, the tube (5) having its widest opening nearest the first opening (3) and having its narrowest opening nearest the second opening (4), and wherein the microphone is located nearest the second opening (4), wherein the first opening is closed with a dust protection membrane (10) and wherein the second opening (4) is closed by an end cap (9), and wherein the tube (5) is made from a polymer to dampen the environment noise.

2. Acoustic probe (1) according to any one of the preceding claims wherein the tube (5) is made from nylon.

3. Acoustic probe (1) according to any one of the preceding claims, preferably wherein the membrane (10) is made of brass.

4. Acoustic probe (1) according to any one of the preceding claims wherein the microphone (6) is of the moving coil type.

5. Acoustic probe (1) according to any one of the preceding claims wherein the internal pressure in the acoustic probe is controlled using pressure vents (11).

6. Acoustic probe (1) according to any one of the preceding claims wherein the housing (2) is made of stainless steel.

7. Use of the acoustic probe according to any one of claims 1 to 6 in a control system for controlling the slag height in a steelmaking process using sound measurements.

8. System for controlling the lance height for a BOS-process comprising an acoustic probe according to any one of claims 1 to 6 for picking up the process sounds, a signal processing unit, and a process control unit for processing the process sounds measured using the acoustic probe wherein the process control unit is a closed loop process control unit and wherein process control is achieved by optimising the distance between the oxygen blowing lance and the level of the molten steel by automatically controlling the lance position and/or changing the oxygen flow rate to influence slag foaming behaviour.

## Patentansprüche

1. Schallsonde (1) zur Aufzeichnung von Prozessgeräuschen in einem Stahlherstellungsprozess, umfassend ein Gehäuse (2) mit einer ersten Öffnung (3) und einer zweiten Öffnung (4) und einem verlängerten Kanal, der die erste Öffnung mit der zweiten Öffnung verbindet, einem separaten Rohr (5), vorgesehen im verlängerten Kanal, und einem Mikrophon (6), wobei das Rohr (5) einen intern verjüngten Kanal umfasst, wobei der Verjüngungswinkel, α, konstant ist und einen Wert zwischen 4 und 20° hat, um einen linearen Frequenzgang zu bieten, wobei die breiteste Öffnung des Rohres (5) der ersten Öffnung (3) nächstgelegen ist und seine engste Öffnung der zweiten Öffnung (4) nächstgelegen ist, und wobei sich das Mikrophon nächstgelegen der zweiten Öffnung (4) befindet, wobei die erste Öffnung mit einer Staubschutzmembran (10) verschlossen ist, und wobei die zweite Öffnung (4) mit einer Endkappe (9) verschlossen ist, und wobei das Rohr (5) aus einem Polymer gefertigt ist, um die Umweltgeräusche zu dämpfen.

2. Schallsonde (1) nach einem der vorangehenden Ansprüche, wobei das Rohr (5) aus Nylon gefertigt ist.

3. Schallsonde (1) nach einem der vorangehenden Ansprüche, wobei vorzugsweise die Membran (10) aus Messing gefertigt ist.

4. Schallsonde (1) nach einem der vorangehenden Anschlüsse, wobei das Mikrophon (6) vom Tauchspulentyp ist.

5. Schallsonde (1) nach einem der vorangehenden Ansprüche, wobei der interne Druck in der Schallsonde über Druckentlastungsöffnungen (11) geregelt wir.

6. Schallsonde (1) nach einem der vorangehenden Ansprüche, wobei das Gehäuse (2) aus Edelstahl gefertigt ist.

7. Verwendung der Schallsonde nach einem der Ansprüche 1 bis 6 in einem Steuersystem zur Steuerung der Schlackenhöhe in einem Stahlherstellungsprozess anhand von Schallmessungen.

8. System zur Steuerung der Lanzenhöhe für einen BOS-Prozess, umfassend eine Schallsonde nach einem der Ansprüche 1 bis 6 zur Aufnahme der Prozessgeräusche, eine Signalverarbeitungseinheit und eine Prozesssteuereinheit zur Verarbeitung der mit der Schallsonde gemessenen Prozessgeräusche, wobei die Prozesssteuereinheit eine Prozesssteuereinheit mit einem geschlossenen Regelkreis ist und wobei die Prozesssteuerung durch Optimierung der Distanz zwischen der Sauerstoffeinblaslanze und dem Niveau des geschmolzenen Stahls durch automatische Steuerung der Lanzenposition und/oder Änderung des Sauerstoffdurchflusses zur Beeinflussung des Schaumverhaltens der Schlacke erreicht wird.

## Revendications

1. Une sonde acoustique (1) pour l'enregistrement des sons de procédé dans un procédé sidérurgique, comprenant un boîtier (2) possédant une première ouverture (3) et une deuxième ouverture (4), et un passage allongé reliant la première ouverture à la deuxième ouverture, un tube séparé (5) placé dans le passage allongé, et un micro (6), le tube (5) comprenant un passage conique interne, dont l'angle de conicité α est constant et présente une valeur comprise entre 4 et 20° afin d'assurer une réponse en fréquence linéaire, le tube (5) présentant son ouverture la plus large au point le plus proche de la première ouverture (3) et son ouverture la plus étroite à proximité de la deuxième ouverture (4), le micro étant placé au point le plus proche de la deuxième ouverture (4), la première ouverture étant fermée par une membrane anti-poussière (10), la deuxième ouverture (4) étant fermée par un bouchon d'extrémité (9), et le tube (5) étant fabriqué en polymère pour amortir le bruit environnant.

2. Une sonde acoustique (1) selon une quelconque des revendications précédentes, dans laquelle le tube (5) est fabriqué en nylon.

3. Une sonde acoustique (1) selon une quelconque des revendications précédentes, dans laquelle la membrane (10) sera de préférence réalisée en laiton.

4. Une sonde acoustique (1) selon une quelconque des revendications précédentes, dans laquelle le micro (6) est du type à cadre mobile.

5. Une sonde acoustique (1) selon une quelconque des revendications précédentes, dans laquelle la pression interne de la sonde acoustique est régulée à l'aide d'évents de pression (11).

6. Une sonde acoustique (1) selon une quelconque des revendications précédentes, dans laquelle le boîtier (2) est réalisé en acier inoxydable.

7. Emploi de la sonde acoustique selon une quelconque des revendications 1 à 6 dans un système de contrôle pour la régulation de la hauteur des scories dans un procédé sidérurgique en utilisant des mesures du son.

8. Système de réglage de la hauteur de la lance dans un procédé BOS, comprenant une sonde acoustique selon une quelconque des revendications 1 à 6 pour capter les sons du procédé, un appareil de traitement des signaux, et un régulateur de procédé pour le traitement des sons du procédé mesurés à l'aide de la sonde acoustique, le régulateur de procédé étant un régulateur de procédé à circuit fermé, et la régulation du procédé étant réalisée en optimisant la distance entre la lance de soufflage d'oxygène et le niveau d'acier fondu, en contrôlant automatiquement la position de la lance et/ou en modifiant le débit d'oxygène de façon à influer sur le comportement de moussage des scories.
